# EUROPÄISCHE PATENTSCHRIFT

(11) **EP 2 680 044 B1**
(45) Veröffentlichungstag und Bekanntmachung des Hinweises auf die Patenterteilung: **21.04.2021**
(21) Anmeldenummer: 13165721.5
(22) Anmeldetag: 29.04.2013
(51) Int. Cl.: G01V 13/00

(54) **Handortungsgerät**
Manually portable locating apparatus
Appareil de localisation portable manuel

(30) Priorität: 25.06.2012 DE 102012210777
(43) Veröffentlichungstag der Anmeldung: 01.01.2014
(73) Patentinhaber: Robert Bosch GmbH, 70442 Stuttgart (DE)
(72) Erfinder: Zibold, Tobias, 70567 Stuttgart (DE); Albrecht, Andrej, 70567 Stuttgart (DE)

(56) Entgegenhaltungen:
- EP-A1- 1 843 177
- WO-A1-03/073130

## Beschreibung

### Stand der Technik

Es ist bereits ein Handortungsgerät mit zumindest einer Ortungsvorrichtung, die dazu vorgesehen ist, eine Wechselspannung in einem Werkstück zu orten, und mit einem Kalibriersender, der dazu vorgesehen ist, zumindest ein Kalibriersignal der Wechselspannung auszusenden, vorgeschlagen worden, beispielsweise in EP 1 843 177 A1 und WO 03/073130 A1.

### Offenbarung der Erfindung

Die Erfindung geht aus von einem Handortungsgerät nach Anspruch 1 mit zumindest einer Ortungsvorrichtung, die dazu vorgesehen ist, eine Wechselspannung in einem Werkstück zu orten.

Es wird vorgeschlagen, dass das Handortungsgerät einen Kalibriersender umfasst, der dazu vorgesehen ist, zumindest ein Kalibriersignal der Wechselspannung auszusenden. Unter einer "Ortungsvorrichtung" soll insbesondere eine Vorrichtung verstanden werden, die dazu vorgesehen ist, zumindest eine Ortsinformation über ein in einem Werkstück insbesondere verdeckt angeordnetes Messobjekt zu bestimmen. Vorzugsweise weist die Ortungsvorrichtung eine Recheneinheit auf, die dazu vorgesehen ist, zumindest eine Richtung und/oder eine Entfernung des Messobjekts relativ zu der Ortungsvorrichtung zu bestimmen. Bevorzugt weist die Ortungsvorrichtung ein Ausgabe mittel auf, über das die Ortungsvorrichtung die Ortsinformation an einen Bediener ausgibt. Insbesondere soll unter "vorgesehen" speziell programmiert, ausgelegt und/oder ausgestattet verstanden werden. Unter einer "Wechselspannung" soll insbesondere eine Spannung mit einem im Wesentlichen sinusförmigen Spannungsverlauf verstanden werden. Vorzugsweise ist die Ortungsvorrichtung dazu vorgesehen, eine niederfrequente Wechselspannung zu orten. Insbesondere soll unter einer "niederfrequenten Wechselspannung" eine Spannung mit einer Frequenz kleiner als 1 kHz verstanden werden. Vorzugsweise ist die Ortungsvorrichtung dazu vorgesehen, eine Netzspannung mit 50 Hz und/oder 60 Hz zu orten. Unter der Wendung "in einem Werkstück" soll insbesondere verstanden werden, dass die Ortungsvorrichtung dazu vorgesehen ist, das innerhalb und/oder hinter dem Werkstück verdeckt angeordnete Messobjekt zu orten. Vorzugsweise ist die Ortungsvorrichtung dazu vorgesehen, ein Ortungssignal, das das Werkstück durchdrungen hat, zumindest zu empfangen. Insbesondere soll unter "orten" eine Bestimmung zumindest einer Ortsinformation eines entfernt und insbesondere verdeckt angeordneten Messobjekts verstanden werden. Unter einem "Kalibriersender" soll insbesondere eine Vorrichtung verstanden werden, die dazu vorgesehen ist, das Kalibriersignal zu generieren, und die eine Sendeantenne umfasst, die in zumindest einem Betriebszustand das Kalibriersignal aussendet. Insbesondere soll unter einem "Kalibriersignal der Wechselspannung" ein Signal verstanden werden, das dazu geeignet ist, einen Einfluss einer Umgebung, die von dem Messobjekt verschieden ist, auf das Ortungssignal durch Reflexion und/oder Absorption an der Umgebung zu erfassen. Vorzugsweise ist das Kalibriersignal als ein niederfrequentes Signal ausgebildet. Insbesondere soll unter einer "Umgebung" in diesem Zusammenhang zumindest ein Werkstück, in dem die Wechselspannung in zumindest einem Betriebszustand geortet wird, und eine das Handortungsgerät haltende Hand eines Bedieners verstanden werden. Unter dem Begriff "aussenden" soll insbesondere verstanden werden, dass die Sendeantenne das Kalibriersignal als elektromagnetische Welle in die Umgebung abgibt. Durch die erfingungsgemäße Ausgestaltung des Handortungsgeräts kann eine besonders genaue Ortung auch unter ungünstigen Bedingungen erreicht werden.

In einer weiteren Ausgestaltung wird vorgeschlagen, dass die Ortungsvorrichtung einen Anteil des Kalibriersignals zur Kalibrierung empfängt, wodurch auf eine eigene Empfangsvorrichtung nur für das Kalibriersignal verzichtet werden kann. Insbesondere soll unter "Kalibrierung" ein Vorgang verstanden werden, bei dem eine Abhängigkeit eines Ortungsergebnisses von der Umgebung reduziert wird. Unter "empfangen" soll insbesondere verstanden werden, dass die Ortungsvorrichtung eine Antenne aufweist, die in zumindest einem Betriebszustand einen Teil eines empfangenen Signals in ein über einen elektrischen Leiter übertragenes Signal umwandelt. Vorzugsweise ist die Ortungsvorrichtung dazu vorgesehen, einen Anteil des Kalibriersignals zur Kalibrierung mit der Ortungsantenne zu empfangen. Alternativ oder zusätzlich könnte die Ortungsvorrichtung dazu vorgesehen sein, zur Kalibrierung einen Anteil des Kalibriersignals mit einer zusätzlichen Empfangsantenne zu empfangen.

Des Weiteren wird vorgeschlagen, dass das Handortungsgerät eine Recheneinheit umfasst, die dazu vorgesehen ist, ein Ortungsergebnis mittels einer Kalibrationsinformation zu kalibrieren, die von einem empfangenen Anteil des Kalibriersignals abhängig ist, wodurch eine konstruktiv einfache Kalibrierung möglich ist. Insbesondere berechnet die Recheneinheit eine Ortsinformation des Messobjekts aus einem Ortungsergebnis der Ortungsvorrichtung und zumindest der Kalibrationsinformation. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Besonders bevorzugt ist die Recheneinheit als ein Microcontroller ausgebildet. Unter einer "Kalibrationsinformation" soll insbesondere eine Information verstanden werden, die einen Einfluss der Umgebung auf das Ortungsergebnis zumindest teilweise beschreibt. Insbesondere soll unter der Wendung "von einem empfangenen Anteil des Kalibriersignals abhängig" verstanden werden, dass die Recheneinheit die Kalibrationsinformation aus dem empfangenen Anteil des Kalibriersignals bestimmt.

Ferner wird vorgeschlagen, dass der Kalibriersender zumindest eine Sendeantenne aufweist, die dazu vorgesehen ist, das Kalibriersignal zumindest im Wesentlichen in das Werkstück zu senden, wodurch eine besonders effiziente Reduzierung von Beeinflussungen des Ortungsergebnisses durch das Werkstück möglich ist. Unter einer "Sendeantenne" soll insbesondere eine Antenne verstanden werden, die in zumindest einem Betriebszustand ein Signal aussendet. Insbesondere soll unter der Wendung "zumindest im Wesentlichen in das Werkstück senden" verstanden werden, dass die Sendeantenne wenigstens 50 % vorteilhaft wenigstens 75 %, einer abgestrahlten Leistung in das Werkstück abstrahlt, wenn das Handortungsgerät mit einer Ortungsseite an dem Werkstück anliegt.

Gemäß der Erfindung wird vorgeschlagen, dass der Kalibriersender zumindest eine Sendeantenne aufweist, die dazu vorgesehen ist, das Kalibriersignal zumindest im Wesentlichen in einen Haltebereich zu senden, wodurch eine besonders effiziente Kalibrierung von Beeinflussungen durch eine Hand des Bedieners möglich ist. Insbesondere soll unter der Wendung "zumindest im Wesentlichen in einen Haltebereich senden" verstanden werden, dass die Sendeantenne wenigstens 30 %, vorteilhaft wenigstens 50 %, besonders vorteilhaft wenigstens 75 %, einer abgestrahlten Leistung in einen Bereich abstrahlt, in dem bei einem Ortungsvorgang eine das Ortungsgerät haltende Hand eines Bedieners angeordnet ist. Vorzugsweise wird der Haltebereich auf zumindest einer Seite von einer Grifffläche des Handortungsgeräts begrenzt. Vorzugsweise sind die in das Werkstück sendende Sendeantenne und die in den Griffbereich sendende Sendeantenne getrennt ausgebildet. Alternativ könnten die Sendeantennen zumindest teilweise einstückig ausgebildet sein.

Weiterhin wird vorgeschlagen, dass die Sendeantenne näher an dem Haltebereich angeordnet ist als zumindest eine Ortungsantenne der Ortungsvorrichtung, wodurch eine Beeinflussung der Ortung durch die Hand des Bedieners besonders erfasst werden kann. Insbesondere soll unter der Wendung "näher an dem Haltebereich angeordnet" verstanden werden, dass ein minimaler Abstand der Sendeantenne zu dem Haltebereich geringer ist als ein minimaler Abstand der Ortungsantenne der Ortungsvorrichtung zu dem Haltebereich.

In einer vorteilhaften Ausbildung der Erfindung wird vorgeschlagen, dass der Kalibriersender eine Sendeantenne aufweist, die zumindest teilweise einstückig mit einer Ortungsantenne der Ortungsvorrichtung ausgebildet ist, wodurch auf eine separate Sendeantenne vorteilhaft verzichtet werden kann. Unter der Wendung "zumindest teilweise einstückig" soll insbesondere in diesem Zusammenhang verstanden werden, dass ein die Sendeantenne bildender Bereich in zumindest einem Betriebszustand zur Ortung ein Ortungssignal aussendet und/oder empfängt.

Zudem wird vorgeschlagen, dass die Ortungsantenne dazu vorgesehen ist, mit einem hochfrequenten Ortungssignal zu orten, wodurch spannungsfreie Messobjekte vorteilhaft geortet werden können. Alternativ oder zusätzlich könnte diese Ortungsantenne der Ortungsvorrichtung dazu vorgesehen sein, ein Messobjekt induktiv und/oder kapazitiv zu orten. Insbesondere soll unter einem "hochfrequenten Ortungssignal" ein Ortungssignal mit einer Frequenz größer als 1 KHz, vorteilhaft größer als 1 MHz, verstanden werden. Vorzugsweise ist die dritte Ortungsvorrichtung dazu vorgesehen, mit einem Ultrabreitbandsignal zu orten. Unter einem "Ultrabreitbandsignal" soll insbesondere ein Ortungssignal mit einer Mittelfrequenz im Frequenzbereich von 250 MHz bis 15 GHz und einer Frequenzbandbreite von zumindest 500 MHz verstanden werden.

Weiterhin wird vorgeschlagen, dass die Ortungsvorrichtung mehrere Ortungsantennen aufweist, wodurch eine Ortsinformation des Messobjekts besonders genau bestimmt werden kann.

In einer vorteilhaften Ausbildung der Erfindung wird vorgeschlagen, dass der Kalibriersender mehrere Sendeantennen aufweist, wodurch eine besonders effiziente Kalibrierung möglich ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Handortungsgerät mit einer Ortungsvorrichtung und einem Kalibriersender und
- Fig. 2: eine schematische Darstellung einer Kalibrierung der Ortungsvorrichtung.

### Beschreibung des Ausführungsbeispiels

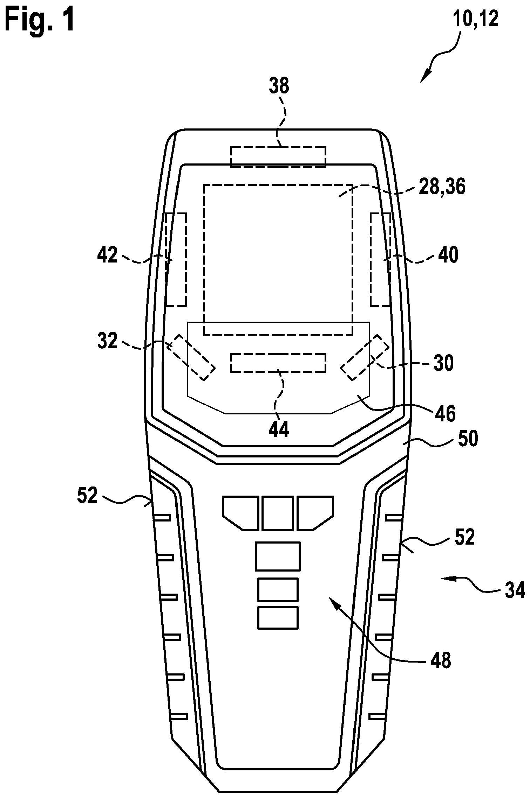

Figur 1 zeigt ein erfindungsgemäßes Handortungsgerät 10 mit zumindest einer Ortungsvorrichtung 12, einem Kalibriersender 16, einer Recheneinheit 26, einem Anzeigemittel 46, einem Bedienmittel 48 und einem Gerätegehäuse 50. Das Gerätegehäuse 50 umschließt einen Innenraum, in dem die Ortungsvorrichtung 12, der Kalibriersender 16 und die Recheneinheit 26 angeordnet sind. Das Gerätegehäuse 50 weist eine Grifffläche 52 auf, die dazu vorgesehen ist, bei einem Ortungsvorgang von einem Bediener gegriffen zu werden. Die Grifffläche 52 begrenzt einen Haltebereich 34. Die Recheneinheit 26 ist dazu vorgesehen, ein Ortungsergebnis mittels des Anzeigemittels 46 an den Bediener auszugeben. Mittels des Bedienmittels 48 ist über die Recheneinheit 26 ein Ortungsvorgang konfigurierbar.

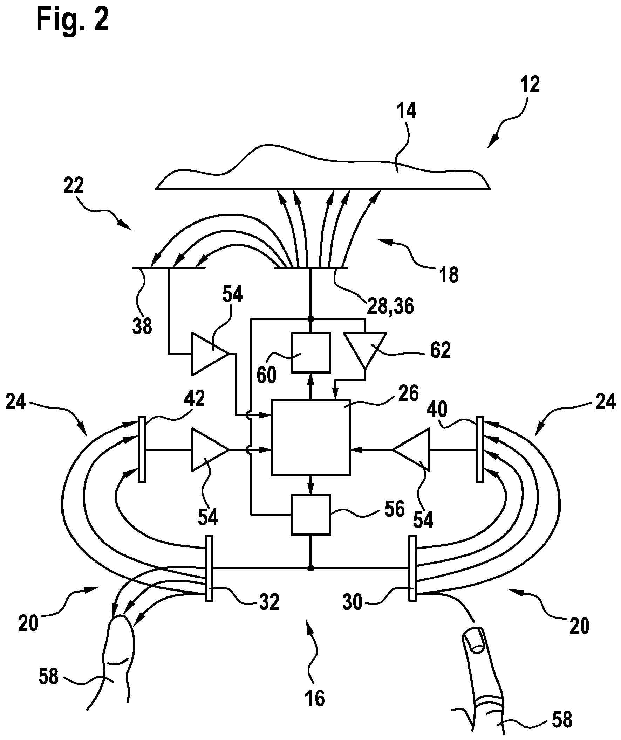

Figur 2 zeigt die Ortungsvorrichtung 12, den Kalibriersender 16 und die Recheneinheit 26. Die Ortungsvorrichtung 12 ist dazu vorgesehen, eine Wechselspannung in einem Werkstück 14 zu orten. Dazu weist die Ortungsvorrichtung 12 vier in Figur 1 dargestellte Ortungsantennen 38, 40, 42, 44 auf. In Figur 2 sind nur drei der vier Ortungsantennen 38, 40, 42, 44 dargestellt. Die Ortungsantennen 38, 40, 42, 44 empfangen ein Ortungssignal, das als ein von der Wechselspannung verursachtes elektromagnetisches Feld ausgebildet ist.

Eine erste der Ortungsantennen 38 ist am Weitesten von dem Haltebereich 34 entfernt angeordnet. Eine zweite der Ortungsantennen 40 und eine dritte der Ortungsantennen 42 sind zu dem Haltebereich 34 symmetrisch angeordnet. Die dritte und die vierte Ortungsantenne 40, 42 sind gleich weit von dem Haltebereich entfernt angeordnet. Eine vierte der Ortungsantennen 42 ist nächstliegend zu dem Haltebereich 34 angeordnet. Die Ortungsvorrichtung 12 umfasst Empfangsmittel 54, die dazu vorgesehen sind, das empfangene Ortungssignal und zumindest ein Kalibriersignal 18, 20 zu filtern und zu verstärken.

Des Weiteren umfasst die Ortungsvorrichtung 12 eine fünfte Ortungsantenne 36, die dazu vorgesehen ist, mit einem hochfrequenten Ortungssignal zu orten. Diese Ortungsantenne 36 ist wie in der Druckschrift DE 10 2008 041 651 A1 beschrieben ausgebildet. Die fünfte Ortungsantenne 36 ist zwischen den anderen Ortungsantennen 38, 40, 42, 44 angeordnet.

Der Kalibriersender 16 umfasst einen Signalgenerator 56, der dazu vorgesehen ist, niederfrequente Kalibriersignale 18, 20 der Wechselspannung zu erzeugen. Hier ist der Signalgenerator 56 dazu vorgesehen, ein Kalibriersignal 18, 20 mit 55 Hz zu erzeugen. Alternativ oder zusätzlich könnte der Signalgenerator 56 dazu vorgesehen sein, ein Kalibriersignal mit einer anderen, dem Fachmann als sinnvoll erscheinenden Frequenz, zu erzeugen. Der Kalibriersender 16 weist mehrere Sendeantennen 28, 30, 32 auf, die dazu vorgesehen sind, die Kalibriersignale 18, 20 auszusenden. Feldlinien der Kalibriersignale 18, 20 sind in Figur 2 schematisch visualisiert. Eine erste der Sendeantennen 28 ist dazu vorgesehen, das Kalibriersignal 18 vor einem Ortungsvorgang im Wesentlichen in das Werkstück 14 zu senden. Das Feld des Kalibriersignals 18 wird dabei von dem Werkstück 14 gegenüber einer Kalibrierung ohne ein Werkstück 14 abgelenkt. Die erste Sendeantennen 28 ist einstückig mit der Ortungsantenne 36 ausgebildet, die dazu vorgesehen ist, mit einem hochfrequenten Ortungssignal zu orten.

Eine zweite und eine dritte der Sendeantennen 30, 32 sind dazu vorgesehen, das Kalibriersignal 20 im Wesentlichen in den Haltebereich 34 zu senden. Das Feld des Kalibriersignals 20 wird dabei von einer Hand 58 des Bedieners gegenüber einer Kalibrierung ohne die Hand 58 des Bedieners abgelenkt. die zweite und die dritte Sendeantenne 30, 32 sind weniger als halb so weit von dem Haltebereich 34 entfernt angeordnet als die erste Ortungsantenne 38. Zudem sind die zweite und die dritte Sendeantenne 30, 32 näher an dem Haltebereich 34 angeordnet als zumindest die zweite und die dritte Ortungsantenne 40, 42 der Ortungsvorrichtung 12. Des Weiteren ist ein Hauptmaximum einer Antennencharakteristik der zweiten und der dritten Sendeantenne 30, 32 auf den Haltebereich 34 ausgerichtet.

Bei der Kalibrierung empfangen die Ortungsantennen 38, 40, 42, 44 der Ortungsvorrichtung 12, die dazu vorgesehen sind eine Wechselspannung zu orten, Anteile 22, 24 der Kalibriersignale 18, 20. Die Recheneinheit 26 ist dazu vorgesehen, aus den Anteilen 22, 24 der Kalibriersignale 18, 20 eine Kalibrationsinformation zu berechnen.

Die Recheneinheit 26 bestimmt aus einem der Anteile 22 des Kalibriersignals 18, den die erste Ortungsantenne 38 empfangen hat, eine erste Kalibrationsinformation. Die erste Kalibrationsinformation beschreibt im Wesentlichen einen Einfluss des Werkstücks 14 auf das Ortungsergebnis. Insbesondere ist die erste Kalibrationsinformation von einer Leifähigkeit der Wand abhängig. Alternativ oder zusätzlich könnte die Recheneinheit 26 die erste Kalibrationsinformation mittels eines Signals bestimmen, das von einer anderen der Ortungsantennen 36, 38, 40, 42, 44 und/oder der Sendeantenne 30, 32 empfangen wurde.

Die Recheneinheit 26 bestimmt aus einem der Anteile 24 des Kalibriersignals 20, die von einer dritten und einer vierten Ortungsantenne 40, 42 empfangen wurden, eine zweite Kalibrationsinformation. Die zweite Kalibrationsinformation beschreibt im Wesentlichen einen Einfluss der Hand 58 des Bedieners auf das Ortungsergebnis. Des Weiteren ist die Recheneinheit 26 dazu vorgesehen, eine Verstärkung der Empfangsmittel 54 von der Kalibrationsinformation abhängig einzustellen.

Eine werkseitige Kalibrierung beschreibt einen Einfluss des Handortungsgeräts 10 ohne das Werkstück 14 und ohne die Hand 58 des Bedieners auf das Ortungsergebnis. Die Recheneinheit 26 gewichtet bei einem Ortungsvorgang ein mit den Ortungsantennen 36, 38, 40, 42, 44 empfangenes Ortungssignal entsprechend der Kalibrationsinformationen und der werkseitigen Kalibrierung. Somit ist die Recheneinheit 26 dazu vorgesehen, das Ortungsergebnis mittels der Kalibrationsinformationen zu kalibrieren.

Die Ortungsvorrichtung 12 umfasst einen Signalgenerator 60, der dazu vorgesehen ist, das hochfrequente Ortungssignal zur Ortung spannungsfreier Messobjekte zu erzeugen. Des Weiteren umfasst die Ortungsvorrichtung 12 ein Empfangsmittel 62 das dazu vorgesehen ist, einen von dem Messobjekt reflektierten und von der Ortungsantenne 36 empfangenen Anteil des hochfrequenten Ortungssignals zu filtern und zu verstärken.

## Patentansprüche

1. Handortungsgerät (10) mit zumindest einer Ortungsvorrichtung (12), die dazu vorgesehen ist, eine Wechselspannung in einem Werkstück (14) zu orten, und mit einem Kalibriersender (16), der dazu vorgesehen ist, zumindest ein Kalibriersignal (18, 20) der Wechselspannung auszusenden, **dadurch gekennzeichnet, dass** der Kalibriersender (16) zumindest eine Sendeantenne (30, 32) aufweist, die dazu vorgesehen ist, das Kalibriersignal (20) zumindest im Wesentlichen in einen Haltebereich (34) des Handortungsgeräts (10) zu senden.

2. Handortungsgerät nach Anspruch1, **dadurch gekennzeichnet, dass** die Ortungsvorrichtung (12) einen Anteil (22, 24) des Kalibriersignals (20) zur Kalibrierung empfängt.

3. Handortungsgerät nach Anspruch 1 oder 2, **gekennzeichnet durch** eine Recheneinheit (26), die dazu vorgesehen ist, ein Ortungsergebnis mittels einer Kalibrationsinformation zu kalibrieren, die von einem empfangenen Anteil (22, 24) des Kalibriersignals (18, 20) abhängig ist.

4. Handortungsgerät nach einem der vorhergehenden Ansprüche, **dadurch gekennzeichnet, dass** der Kalibriersender (16) zumindest eine Sendeantenne (28) aufweist, die dazu vorgesehen ist, das Kalibriersignal (18) zumindest im Wesentlichen in das Werkstück (14) zu senden.

5. Handortungsgerät nach einem der vorhergehenden Ansprüche , **dadurch gekennzeichnet, dass** die Sendeantenne (30, 32), die dazu vorgesehen ist, das Kalibriersignal (20) zumindest im Wesentlichen in einen Haltebereich (34) zu senden, näher an dem Haltebereich (34) angeordnet ist als zumindest eine Ortungsantenne (36) der Ortungsvorrichtung (12).

6. Handortungsgerät nach einem der vorhergehenden Ansprüche, **dadurch gekennzeichnet, dass** der Kalibriersender (16) eine Sendeantenne (28) aufweist, die dazu vorgesehen ist, das Kalibriersignal (18) zumindest im Wesentlichen in das Werkstück (14) zu senden und die zumindest teilweise einstückig mit einer Ortungsantenne (36) der Ortungsvorrichtung (12) ausgebildet ist.

7. Handortungsgerät nach Anspruch 6, **dadurch gekennzeichnet, dass** die Ortungsantenne (36) dazu vorgesehen ist, mit einem hochfrequenten Ortungssignal zu orten.

8. Handortungsgerät nach einem der vorhergehenden Ansprüche, **dadurch gekennzeichnet, dass** die Ortungsvorrichtung (12) mehrere Ortungsantennen (36, 38, 40, 42, 44) aufweist.

9. Handortungsgerät nach einem der vorhergehenden Ansprüche, **dadurch gekennzeichnet, dass** der Kalibriersender (16) mehrere Sendeantennen (28, 30, 32) aufweist.

10. Verfahren zur Kalibrierung eines Handortungsgeräts (10) mit einem Kalibriersender (16), der ein Kalibriersignal (18, 20) einer Wechselspannung zumindest im Wesentlichen in einen Haltebereich (34) des Handortungsgeräts (10) aussendet und einer Ortungsvorrichtung (12), die nach der Kalibrierung eine Wechselspannung in einem Werkstück (14) ortet.

## Claims

1. Hand-held locating appliance (10) having at least one locating apparatus (12), which is provided for the purpose of locating an AC voltage in a workpiece (14), and having a calibration transmitter (16), which is provided for the purpose of transmitting at least one calibration signal (18, 20) for the AC voltage, **characterized in that** the calibration transmitter (16) has at least one transmitting antenna (30, 32), which is provided for the purpose of transmitting the calibration signal (20) at least substantially into a holding region (34) of the hand-held locating appliance (10).

2. Hand-held locating appliance according to Claim 1, **characterized in that** the locating apparatus (12) receives a proportion (22, 24) of the calibration signal (20) for the purpose of calibration.

3. Hand-held locating appliance according to Claim 1 or 2, **characterized by** a computation unit (26), which is provided for the purpose of calibrating a locating result by means of an item of calibration information, which is dependent on a received proportion (22, 24) of the calibration signal (18, 20).

4. Hand-held locating appliance according to one of the preceding claims, **characterized in that** the calibration transmitter (16) has at least one transmitting antenna (28), which is provided for the purpose of transmitting the calibration signal (18) at least substantially into the workpiece (14).

5. Hand-held locating appliance according to one of the preceding claims, **characterized in that** the transmitting antenna (30, 32), which is provided for the purpose of transmitting the calibration signal (20) at least substantially into a holding region (34), is arranged closer to the holding region (34) than at least one locating antenna (36) of the locating apparatus (12).

6. Hand-held locating appliance according to one of the preceding claims, **characterized in that** the calibration transmitter (16) has a transmitting antenna (28), which is provided for the purpose of transmitting the calibration signal (18) at least substantially into the workpiece (14) and which is at least partially formed in one piece with a locating antenna (36) of the locating apparatus (12).

7. Hand-held locating appliance according to Claim 6, **characterized in that** the locating antenna (36) is provided for the purpose of locating by means of a highfrequency locating signal.

8. Hand-held locating appliance according to one of the preceding claims, **characterized in that** the locating apparatus (12) has a plurality of locating antennas (36, 38, 40, 42, 44).

9. Hand-held locating appliance according to one of the preceding claims, **characterized in that** the calibration transmitter (16) has a plurality of transmitting antennas (28, 30, 32).

10. Method for calibrating a hand-held locating appliance (10) having a calibration transmitter (16), which transmits a calibration signal (18, 20) for an AC voltage at least substantially into a holding region (34) of the hand-held locating appliance (10), and a locating apparatus (12), which locates an AC voltage in a workpiece (14) after calibration.

## Revendications

1. Appareil de localisation manuel (10), comprenant au moins un dispositif de localisation (12) qui est prévu pour localiser une tension alternative dans une pièce à travailler (14), et un émetteur d'étalonnage (16) qui est prévu pour émettre au moins un signal d'étalonnage (18, 20) de la tension alternative, **caractérisé en ce que** l'émetteur d'étalonnage (16) présente au moins une antenne d'émission (30, 32) qui est prévue pour émettre le signal d'étalonnage (20) au moins substantiellement dans une zone d'immobilisation (34) de l'appareil de localisation manuel (10).

2. Appareil de localisation manuel selon la revendication 1, **caractérisé en ce que** le dispositif de localisation (12) reçoit une partie (22, 24) du signal d'étalonnage (20) pour l'étalonnage.

3. Appareil de localisation manuel selon la revendication 1 ou 2, **caractérisé par** une unité de calcul (26) qui est prévue pour étalonner un résultat de localisation au moyen d'une information d'étalonnage qui dépend d'une partie reçue (22, 24) du signal d'étalonnage (18, 20).

4. Appareil de localisation manuel selon l'une quelconque des revendications précédentes, **caractérisé en ce que** l'émetteur d'étalonnage (16) présente au moins une antenne d'émission (28) qui est prévue pour émettre le signal d'étalonnage (18) au moins substantiellement dans la pièce à travailler (14).

5. Appareil de localisation manuel selon l'une quelconque des revendications précédentes, **caractérisé en ce que** l'antenne d'émission (30, 32), qui est prévue pour émettre le signal d'étalonnage (20) au moins substantiellement dans une zone d'immobilisation (34), est disposée plus près de la zone d'immobilisation (34) qu'au moins une antenne de localisation (36) du dispositif de localisation (12).

6. Appareil de localisation manuel selon l'une quelconque des revendications précédentes, **caractérisé en ce que** l'émetteur d'étalonnage (16) présente une antenne d'émission (28) qui est prévue pour émettre le signal d'étalonnage (18) au moins substantiellement dans la pièce à travailler (14), et qui est réalisée au moins en partie d'un seul tenant avec une antenne de localisation (36) du dispositif de localisation (12).

7. Appareil de localisation manuel selon la revendication 6, **caractérisé en ce que** l'antenne de localisation (36) est prévue pour effectuer une localisation avec un signal de localisation haute fréquence.

8. Appareil de localisation manuel selon l'une quelconque des revendications précédentes, **caractérisé en ce que** le dispositif de localisation (12) présente plusieurs antennes de localisation (36, 38, 40, 42, 44) .

9. Appareil de localisation manuel selon l'une quelconque des revendications précédentes, **caractérisé en ce que** l'émetteur d'étalonnage (16) présente plusieurs antennes d'émission (28, 30, 32).

10. Procédé d'étalonnage d'un appareil de localisation manuel (10) comprenant un émetteur d'étalonnage (16) qui émet un signal d'étalonnage (18, 20) d'une tension alternative au moins substantiellement dans une zone d'immobilisation (34) de l'appareil de localisation manuel (10), et un dispositif de localisation (12) qui localise une tension alternative dans une pièce à travailler (14) après l'étalonnage.
